# EUROPEAN PATENT APPLICATION

(11) **EP 4 716 321 A1**
(43) Date of publication of application: **25.03.2026**
(21) Application number: 23937068.7
(22) Date of filing: 18.05.2023
(51) Int. Cl.: H04W 64/00, H04W 72/25, H04W 72/543

(54) **RESOURCE DETERMINATION METHOD AND APPARATUS, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: LI, Lisi, Beijing 100085 (CN); JIANG, Xiaowei, Beijing 100085 (CN); SHEN, Yang, Beijing 100085 (CN)
(74) Representative: Gunzelmann, Rainer
(86) International application number: PCT/CN2023/095154
(87) International publication number: WO 2024/234388

(57) **Abstract**

The present disclosure relates to the technical field of communications, and specifically relates to a resource determination method and apparatus, a communication device, a communication system, and a storage medium. The resource determination method comprises: on the basis of first information received from a second node, determining related resources of a terminal for sidelink positioning. According to the present disclosure, a first node receives first information from a second node, and further determines, on the basis of the first information, related resources of a terminal for sidelink positioning. In this way, the first node may not autonomously determine related resources of the terminal for sidelink positioning, which is beneficial to ensuring the positioning effect of the terminal based on the resource reference sidelink positioning.

## Description

### TECHNICAL FIELD

The present disclosure relates to the field of communication technologies, and in particular relates to a resource determination method, a resource determination apparatus, a communication device, a communication system, and a storage medium.

### BACKGROUND

Positioning based on a sidelink (SL) between terminals may be called sidelink positioning. However, there are some problems in the process of sidelink positioning.

### SUMMARY

The embodiments of the present disclosure provide a resource determination method, a resource determination apparatus, a communication device, a communication system, and a storage medium to solve technical problems in the related art.

According to a first aspect of embodiments of the present disclosure, there is provided a resource determination method, performed by a first node and including: determining relevant resources used by a terminal for sidelink positioning based on first information received from a second node.

According to a second aspect of embodiments of the present disclosure, there is provided a resource determination method, performed by a second node and including: sending first information to a first node, where the first information is used by the first node to determine relevant resources used by a terminal for sidelink positioning.

According to a third aspect of embodiments of the present disclosure, there is provided a resource determination apparatus, which is configured at a first node and includes: a processing module configured to determine relevant resources used by a terminal for sidelink positioning based on first information received from a second node.

According to a fourth aspect of embodiments of the present disclosure, there is provided a resource determination apparatus, which is configured at a second node and includes: a sending module configured to send first information to a first node, where the first information is used by the first node to determine relevant resources used by a terminal for sidelink positioning.

According to a fifth aspect of embodiments of the present disclosure, there is provided a communication device, including: one or more processors, where the one or more processors are configured to call instructions to cause the communication device to execute the resource determination apparatus described above.

According to a sixth aspect of embodiments of the present disclosure, there is provided a communication system, including a first node and a second node, where the first node is configured to implement the resource determination method performed by the first node, and the second node is configured to implement the resource determination method performed by the second node.

According to a seventh aspect of embodiments of the present disclosure, there is provided a storage medium having stored therein instructions that, when executed on a communication device, causes the communication device to perform the resource determination method described above.

### BRIEF DESCRIPTION OF THE DRAWINGS

To more clearly illustrate the technical solutions in the embodiments of the present disclosure, the accompanying drawings used in the description of the embodiments will be briefly introduced below. Apparently, the accompanying drawings described below are only some embodiments of the present disclosure. For those skilled in the art, other drawings may be obtained based on these drawings without creative effort.
FIG. 1A is a schematic diagram illustrating the architecture of a communication system in an embodiment of the present disclosure.
FIG. 1B is an interactive schematic diagram illustrating a resource determination method according to an embodiment of the present disclosure.
FIG. 2 is a schematic flowchart illustrating a resource determination method according to an embodiment of the present disclosure.
FIG. 3 is a schematic flowchart illustrating another resource determination method according to an embodiment of the present disclosure.
FIG. 4 is a schematic flowchart illustrating yet another resource determination method according to an embodiment of the present disclosure.
FIG. 5 is a schematic flowchart illustrating a resource determination method according to an embodiment of the present disclosure.
FIG. 6 is a schematic flowchart illustrating a resource determination apparatus according to an embodiment of the present disclosure.
FIG. 7 is a schematic flowchart illustrating a resource determination apparatus according to an embodiment of the present disclosure.
FIG. 8 is a schematic block diagram illustrating a communication device 8100 provided in an embodiment of the present disclosure.
FIG. 9 is a schematic block diagram illustrating a chip 9200 provided in an embodiment of the present disclosure.

### DETAILED DESCRIPTION

The embodiments of the present disclosure provide a resource determination method, a resource determination apparatus, a communication device, a communication system, and a storage medium.

In a first aspect, embodiments of the present disclosure provide a resource determination method, performed by a first node and including: determining relevant resources used by a terminal for sidelink positioning based on first information received from a second node.

According to the embodiments of the present disclosure, the first node receives first information from the second node, and then determines the relevant resources used by the terminal for sidelink positioning based on the first information. Accordingly, the first node does not need to independently determine the relevant resources used by the terminal for sidelink positioning. Instead, the first node may determine the relevant resources used by the terminal for sidelink positioning based on external information, i.e., the first information from the second node. This helps to ensure that the determined relevant resources used by the terminal for sidelink positioning may be well applied to the terminal, thereby ensuring the positioning effect of sidelink positioning by the terminal based on the resources.

In combination with some embodiments of the first aspect, in some embodiments, the relevant resources for sidelink positioning include at least one of: ranging and sidelink positioning protocol transmission resources, or sidelink positioning resources.

In combination with some embodiments of the first aspect, in some embodiments, the first information includes at least one of: sidelink positioning request information, or authorization information for the terminal.

In combination with some embodiments of the first aspect, in some embodiments, the sidelink positioning request information includes at least one of: a role of the terminal, an identifier of the terminal, a transaction identifier for sidelink positioning, a service type for sidelink positioning, a Quality of Service (QoS) for sidelink positioning, transmission characteristic information of a sidelink positioning reference signal, transmission stop information of a sidelink positioning reference signal, or information of a cell where a sidelink positioning terminal is located.

In combination with some embodiments of the first aspect, in some embodiments, the transmission characteristic information of the sidelink positioning reference signal includes at least one of: cell information, bandwidth information, a transmission type, transmission information, a start time, a duration, or an end time.

In combination with some embodiments of the first aspect, in some embodiments, the authorization information for the terminal includes at least one of: role information authorized to the terminal, authorized transmission service quality information, or authorized positioning service quality information.

In combination with some embodiments of the first aspect, in some embodiments, the method further includes at least one of: determining to allocate the relevant resources for sidelink positioning to the terminal, and sending configuration information for the relevant resources for sidelink positioning to the second node; or determining not to allocate the relevant resources for sidelink positioning to the terminal, and sending allocation failure information for the relevant resources for sidelink positioning to the second node.

In combination with some embodiments of the first aspect, in some embodiments, the configuration information and/or the allocation failure information are carried in at least one of:
a new radio positioning protocol A message, where the first node includes an access network device and the second node includes a core network device;
a next generation application protocol (NGAP) message, where the first node includes an access network device and the second node includes a core network device;
a signaling, where the first node includes an access network device and the second node includes the terminal; or
an F1 application protocol (F1AP) message, where the first node includes a next generation Node B-distributed unit (gNB-DU) in a radio access network separation architecture, and the second node includes a next generation Node B-centralized unit (gNB-CU) or a next generation Node B-centralized unit-control plane (gNB-CU-CP) in the radio access network separation architecture.

In combination with some embodiments of the first aspect, in some embodiments, the resource determination method further includes: sending information for the relevant resources used by the terminal for sidelink positioning to a third node.

In combination with some embodiments of the first aspect, in some embodiments, sending the information for the relevant resources used by the terminal for sidelink positioning to the third node includes: sending the information for the relevant resources used by the terminal for sidelink positioning to the third node via a fourth node.

In combination with some embodiments of the first aspect, in some embodiments, the first information is carried in at least one of:
an NGAP message, where the first node includes an access network device and the second node includes a core network device;
an F1AP message, where the first node includes a gNB-DU in a radio access network separation architecture, and the second node includes a gNB-CU or a gNB-CU-CP in the radio access network separation architecture;
an Xn application protocol (XnAP) message, where the first node includes a target base station in a handover procedure and the second node includes a source base station in the handover procedure, or the first node includes a new serving base station and the second node includes a last serving base station;
a new radio positioning protocol A message, where the first node includes an access network device and the second node includes a core network device; or
a signaling, where the first node includes an access network device and the second node includes the terminal.

In a second aspect, embodiments of the present disclosure provide a resource determination method, performed by a second node and including: sending first information to a first node, where the first information is used by the first node to determine relevant resources used by a terminal for sidelink positioning.

According to the embodiments of the present disclosure, the second node may send first information to the first node, and the first information is used by the first node to determine relevant resources used by the terminal for sidelink positioning. Accordingly, the first node does not need to independently determine the relevant resources used by the terminal for sidelink positioning. Instead, the first node may determine the relevant resources used by the terminal for sidelink positioning based on external information, i.e., the first information from the second node. This helps to ensure that the determined relevant resources used by the terminal for sidelink positioning may be well applied to the terminal, thereby ensuring the positioning effect of sidelink positioning by the terminal based on the resources.

In combination with some embodiments of the second aspect, in some embodiments, the relevant resources for sidelink positioning include at least one of: ranging and sidelink positioning protocol transmission resources, or sidelink positioning resources.

In combination with some embodiments of the second aspect, in some embodiments, the first information includes at least one of: sidelink positioning request information, or authorization information for the terminal.

In combination with some embodiments of the second aspect, in some embodiments, the sidelink positioning request information includes at least one of: a role of the terminal, an identifier of the terminal, a transaction identifier for sidelink positioning, a service type for sidelink positioning, a QoS for sidelink positioning, transmission characteristic information of a sidelink positioning reference signal, transmission stop information of a sidelink positioning reference signal, or information of a cell where a sidelink positioning terminal is located.

In combination with some embodiments of the second aspect, in some embodiments, the transmission characteristic information of the sidelink positioning reference signal includes at least one of: cell information, bandwidth information, a transmission type, transmission information, a start time, a duration, or an end time.

In combination with some embodiments of the second aspect, in some embodiments, the authorization information for the terminal includes at least one of: role information authorized to the terminal, authorized transmission service quality information, or authorized positioning service quality information.

In combination with some embodiments of the second aspect, in some embodiments, the method further includes at least one of: receiving configuration information for the relevant resources for sidelink positioning sent by the first node; or receiving allocation failure information for the relevant resources for sidelink positioning sent by the first node.

In combination with some embodiments of the second aspect, in some embodiments, the configuration information and/or the allocation failure information are carried in at least one of:
a new radio positioning protocol A message, where the first node includes an access network device and the second node includes a core network device;
an NGAP message, where the first node includes an access network device and the second node includes a core network device;
a signaling, where the first node includes an access network device and the second node includes the terminal; or
an F1AP message, where the first node includes a gNB-DU in a radio access network separation architecture, and the second node includes a gNB-CU or a gNB-CU-CP in the radio access network separation architecture.

In combination with some embodiments of the second aspect, in some embodiments, the first information is carried in at least one of:
an NGAP message, where the first node includes an access network device and the second node includes a core network device;
an F1AP message, where the first node includes a gNB-DU in a radio access network separation architecture, and the second node includes a gNB-CU or a gNB-CU-CP in the radio access network separation architecture;
an XnAP message, where the first node includes a target base station in a handover procedure and the second node includes a source base station in the handover procedure, or the first node includes a new serving base station and the second node includes a last serving base station;
a new radio positioning protocol A message, where the first node includes an access network device and the second node includes a core network device; or
a signaling, where the first node includes an access network device and the second node includes the terminal.

In a third aspect, embodiments of the present disclosure provide a resource determination apparatus, which is configured at a first node and includes: a processing module configured to determine relevant resources used by a terminal for sidelink positioning based on first information received from a second node.

In a fourth aspect, embodiments of the present disclosure provide a resource determination apparatus, which is configured at a second node and includes: a sending module configured to send first information to a first node, where the first information is used by the first node to determine relevant resources used by a terminal for sidelink positioning.

In a fifth aspect, embodiments of the present disclosure provide a communication device, which includes one or more processors and one or more memories for storing instructions. The processors are configured to call the instructions to cause the communication device to perform the resource determination methods described in the first and second aspects as well as optional implementations of the first and second aspects.

In a sixth aspect, embodiments of the present disclosure provide a communication system, including a first node and a second node, where the first node is configured to implement the methods described in the first and second aspects as well as optional implementations of the first and second aspects, and the second node is configured to implement the methods described in the first and second aspects as well as optional implementations of the first and second aspects.

In a seventh aspect, embodiments of the present disclosure provide a storage medium, which has stored therein instructions that, when executed on a communication device, cause the communication device to perform the methods described in the first and second aspects as well as optional implementations of the first and second aspects.

In an eighth aspect, embodiments of the present disclosure provide a program product that, when executed on a communication device, causes the communication device to perform the methods described in the first and second aspects as well as optional implementations of the first and second aspects.

In a ninth aspect, embodiments of the present disclosure provide a computer program that, when run on a computer, causes the computer to perform the methods described in the first and second aspects as well as optional implementations of the first and second aspects.

It may be understood that the resource determination apparatus, the communication device, the communication system, the storage medium, the program product, and the computer program which are mentioned above are all configured to execute the methods provided in the embodiments of the present disclosure. Therefore, regarding the beneficial effects they may achieve, reference may be made to the beneficial effects of the corresponding methods, which will not be repeated here.

The embodiments of the present disclosure provide a resource determination method, a resource determination apparatus, a communication device, a communication system, and a storage medium. In some embodiments, terms such as a resource determination method, an information processing method, and a communication method may be used interchangeably; terms such as a resource determination apparatus, an information processing apparatus, and a communication apparatus may be used interchangeably; and terms such as an information processing system, and a communication system may be used interchangeably.

The embodiments of the present disclosure are not exhaustive, but are merely illustrative of some embodiments, and are not intended to limit the scope of protection of the present disclosure. Unless there is any contradiction, each step in a particular embodiment may be implemented as an independent embodiment, and the steps may be arbitrarily combined. For example, the solution after removing some steps in a particular embodiment may also be implemented as an independent embodiment, and the order of the steps in a particular embodiment may be arbitrarily interchanged. In addition, the optional implementations in a particular embodiment may be arbitrarily combined. Furthermore, the embodiments may be arbitrarily combined. For example, some or all steps in different embodiments may be arbitrarily combined, and a particular embodiment may be arbitrarily combined with optional implementations of other embodiments.

In each embodiment of the present disclosure, unless otherwise specified or contradicted by logic, the terms and/or descriptions between the embodiments are consistent and may be referenced by each other. The technical features in different embodiments may be combined based on their inherent logical relationships to form a new embodiment.

The terms used in the embodiments of the present disclosure are only for the purpose of describing specific embodiments and are not intended to limit the present disclosure.

In the embodiments of the present disclosure, unless otherwise specified, elements expressed in the singular form, such as "a," "an," "the," "above," "said," "above-mentioned," "this," or the like, may mean "one and only one," "one or more," "at least one," or the like.

In the embodiments of the present disclosure, "a plurality of" refers to two or more.

In some embodiments, terms such as "at least one of," "one or more," "a plurality of," "multiple," and the like may be used interchangeably.

In some embodiments, the descriptions such as "at least one of A or B," "A and/or B," "A in one case, B in another case" or "in response to one case A, in response to another case B" may include the following technical solutions depending on the situations: A is executed in some embodiments (A is executed independently from B); B is executed in some embodiments (B is executed independently from A); A or B is selected for execution in some embodiments (A and B are selectively executed); and A and B are executed in some embodiments (A and B are both executed). The same applies when there are more branches such as A, B, and C.

In some embodiments, the descriptions such as "A or B" may include the following technical solutions depending on the situations: A is executed in some embodiments (A is executed independently from B); B is executed in some embodiments (B is executed independently from A); and A or B is selected for execution in some embodiments (A and B are selectively executed). The same applies when there are more branches such as A, B, and C.

The prefixes such as "first" and "second" in the embodiments of the present disclosure are only used to distinguish different described objects and do not constitute any restrictions on the position, order, priority, quantity or content of the described objects. For the statement of the described objects, reference is made to the description in the context of the claims or embodiments, and no unnecessary restrictions should be constituted due to the use of prefixes. For example, if the described object is a "field", the ordinal numbers preceding the "fields" in a "first field" and a "second field" do not limit the position or order of the "fields". "First" and "second" do not limit whether the "fields" they modify are in the same message, nor do they limit the order of the "first field" and "second field". For another example, if the described object is "level", then the ordinal numbers preceding the "levels" in a "first level" and a "second level" do not restrict the priority between "levels". For another example, the number of the described objects is not limited by ordinal numbers and may be one or more. Taking a "first device" as an example, the number of "devices" may be one or more. In addition, the objects modified by different prefixes may be the same or different. For example, if the described object is a "device", then the "first device" and the "second device" may be the same device or different devices, and the types of the "first device" and the "second device" may be the same or different; for another example, if the described object is "information", then "first information" and "second information" may be the same information or different information, and the contents of the "first information" and the "second information" may be the same or different.

In some embodiments, "including A," "comprising A," "indicating A," and "carrying A" may be interpreted as directly carrying A or indirectly indicating A.

In some embodiments, terms such as "in response to...," "in response to determining...," "in the case of...," "at the time of...," "when...," "if...," "in a case where...," and the like may be used interchangeably.

In some embodiments, terms such as "greater than," "greater than or equal to," "not less than," "more than," "more than or equal to," "not smaller than," "higher than," "higher than or equal to," "not lower than," and "above" may be used interchangeably; and terms such as "less than," "less than or equal to," "not greater than," "smaller than," "smaller than or equal to," "not more than," "lower than," "lower than or equal to," "not higher than," and "below" may be used interchangeably.

In some embodiments, devices and the like may be interpreted as physical or virtual, and their names are not limited to the names described in the embodiments.

Terms such as "apparatus," "equipment," "device," "circuit," "network element," "node," "function," "unit," "section," "system," "network," "chip," "chip system," "entity," and "body" may be used interchangeably.

In some embodiments, the "network" may be interpreted as devices included in the network (e.g., an access network device, a core network device, or the like).

In some embodiments, terms such as "access network device (AN device)," "radio access network device (RAN device)," "base station (BS)," "radio base station," "fixed station," "node," "access point," "transmission point (TP)," "reception point (RP)," "transmission/reception point (TRP)" "panel," "antenna panel," "antenna array," "cell," "macro cell," "small cell," "femto cell," "pico cell," "sector," "cell group," "serving cell," "carrier," "component carrier," and "bandwidth part (BWP)" may be used interchangeably.

In some embodiments, terms such as terminal, terminal device, user equipment (UE), user terminal, mobile station (MS), mobile terminal (MT), subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, and client may be used interchangeably.

In some embodiments, an access network device, a core network device, or a network device may be replaced by a terminal. For example, the various embodiments of the present disclosure may also be applied to a structure in which the communication between a terminal and an access network device, a core network device, or a network device is replaced by the communication between multiple terminals (for example, device-to-device (D2D) communication, vehicle-to-everything (V2X) communication, or the like). In this case, the terminal may be configured to have all or some of the functions of the access network device. Furthermore, terms such as "uplink" and "downlink" may be replaced with terms corresponding to an inter-terminal communication (e.g., "side"). For example, an uplink channel, a downlink channel, and the like may be replaced by a side channel, and an uplink, a downlink, and the like may be replaced by a side link.

In some embodiments, the terminal may be replaced by an access network device, a core network device, or a network device. In this case, the access network device, the core network device, or the network device may also be configured to have all or some of the functions of the terminal.

In some embodiments, obtaining data, information, and the like may comply with the laws and regulations of the country where the data, information, and the like are obtained.

In some embodiments, data, information, and the like may be obtained with the consent of the user.

In addition, each element, each row, or each column in the table in the embodiments of the present disclosure may be implemented as an independent embodiment, and the combination of any elements, any rows, and any columns may also be implemented as an independent embodiment.

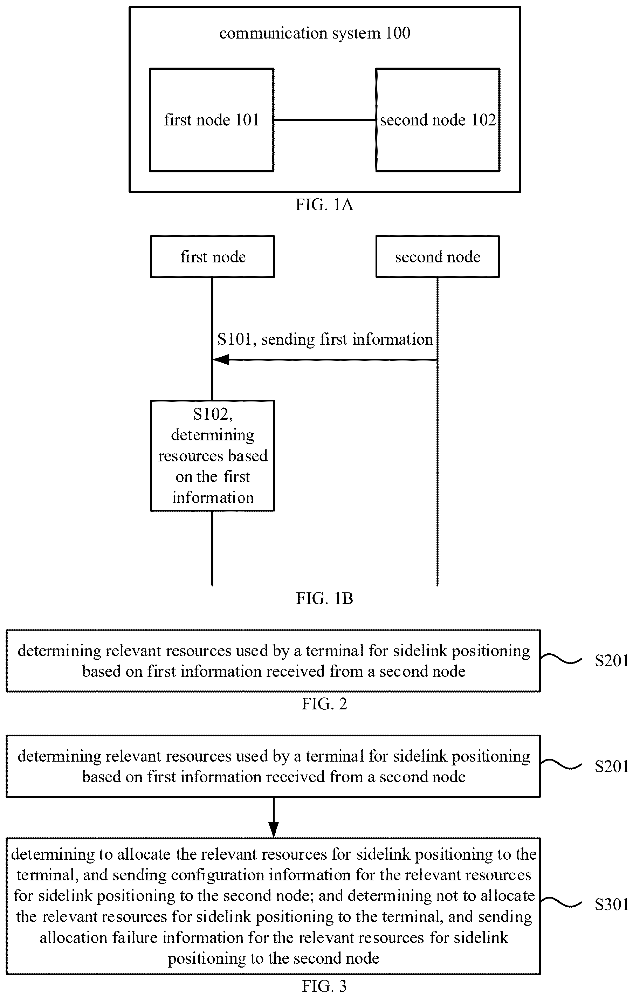

FIG. 1A is a schematic diagram illustrating the architecture of a communication system in an embodiment of the present disclosure.

As shown in FIG. 1A, the communication system 100 includes a first node 101 and a second node 102.

In some embodiments, the first node includes, but is not limited to, an access network device.

In some embodiments, the second node includes at least one of: a terminal, or a core network device.

In some embodiments, the core network device may be a single device, including one or more network elements, or may be multiple devices or a group of devices, each including all or some of the aforementioned one or more network elements. The network elements may be virtual or physical. The core network includes, for example, at least one of an Evolved Packet Core (EPC), a 5G Core Network (5GCN), or a Next Generation Core (NGC).

In some embodiments, for example, the terminal 101 includes, but is not limited to, at least one of: mobile phones, wearable devices, Internet of Things devices, cars with communication functions, smart cars, tablets (Pads), computers with wireless transceiver functions, virtual reality (VR) devices, augmented reality (AR) devices, wireless terminals in industrial control, wireless terminals in self-driving, wireless terminals in remote medical surgery, wireless terminals in smart grids, wireless terminals in transportation safety, wireless terminals in smart cities, or wireless terminals in smart homes.

In some embodiments, the access network device 102 may be a node or device that connects the terminal to a wireless network. The access network device may include, but is not limited to, at least one of: evolved Node B (eNB), next generation eNB (ng-eNB), next generation Node B (gNB), node B (NB), home node B (HNB), home evolved node B (HeNB), radio backhaul devices, radio network controllers (RNCs), base station controllers (BSCs), base transceiver stations (BTSs), base band units (BBUs), mobile switching centers in a 5G communication system; base stations in a 6G communication system, Open RANs, Cloud RANs, base stations in other communication systems, or access nodes in a Wi-Fi system.

In some embodiments, the technical solutions in the present disclosure may be applied to the Open RAN architecture. In this case, the interfaces between or within access network devices involved in the embodiments of the present disclosure may be transformed into internal interfaces of the Open RAN. The processes and information interactions between these internal interfaces may be implemented by software or programs.

In some embodiments, the access network device may be composed of a centralized unit (CU) and a distributed unit (DU). The CU may also be called a control unit. The CU-DU structure may separate the protocol layers of the access network device. Some of the protocol layer functions are centrally controlled by the CU, while the remaining part or all of the protocol layer functions are distributed in the DU, and the DU is centrally controlled by the CU. However, this is not the only possibility.

It may be understood that the communication system described in the present disclosure is for the purpose of more clearly illustrating the technical solutions in the embodiments of the present disclosure, and does not constitute a limitation on the technical solutions proposed in the embodiments of the present disclosure. As those skilled in the art will know, with the evolution of the system architecture and the emergence of new service scenarios, the technical solutions proposed in the embodiments of the present disclosure are also applicable to similar technical problems.

The following embodiments of the present disclosure may be applied to the communication system 100 shown in FIG. 1A, or to some entities thereof, but is not limited thereto. The entities shown in FIG. 1A are illustrative. The communication system may include all or some of the entities in FIG. 1A, or may include other entities outside of FIG. 1A. The number and form of the entities are arbitrary. Each entity may be physical or virtual. The connection relationship between the entities is illustrative. Entities may not be connected to each other or may be connected in any way. The connection may be direct or indirect, and may be wired or wireless.

The embodiments of the present disclosure may be applied to Long Term Evolution (LTE) systems, LTE-Advanced (LTE-A) systems, LTE-Beyond (LTE-B) systems, SUPER 3G systems, International Mobile Telecommunications-Advanced (IMT-Advanced) systems, 4G mobile communication systems, 5G mobile communication systems, 5G new radio (NR) systems, Future Radio Access (FRA) systems, New-Radio Access Technology (RAT) systems, New Radio (NR) systems, New radio access (NX) systems, Future generation radio access (FX) systems, Global System for Mobile communications (GSM), CDMA2000, Ultra Mobile Broadband (UMB) systems, IEEE 802.11 (Wi-Fi), IEEE 802.16 (WiMAX), IEEE 802.20, Ultra-Wideband (UWB), Bluetooth (a registered trademark), PLMN networks, D2D systems, Machine-to-Machine (M2M) systems, IoT systems, V2X systems, systems utilizing other communication methods, next-generation systems built upon them, and the like. In addition, multiple systems may also be combined (for example, a combination of 5G and LTE or LTE-A, or the like) for application.

When the terminal participating in sidelink positioning is within the coverage area of a network device, the network device needs to allocate relevant resources for sidelink positioning to the terminal. However, the resources used by the terminal for sidelink positioning determined by the network device may not be well applied to the terminal, for example, it may be difficult for the resources to meet the requirements, which include at least one of: operator permissions (e.g., network authorization), terminal positioning requirements, requirements to avoid resource conflicts, and requirements to allocate resources reasonably.

FIG. 1B is an interactive schematic diagram illustrating a resource determination method according to an embodiment of the present disclosure. The resource determination method shown in this embodiment may be used in the communication system as shown in FIG. 1B. The resource determination method includes the following steps.

At step S101, a second node sends first information to a first node.

In some embodiments, the first information includes at least one of: sidelink positioning request information, or authorization information for the terminal.

At step S102, the first node determines resources based on the first information.

In some embodiments, the resources determined by the first node based on the first information include relevant resources used by the terminal for sidelink positioning.

In some embodiments, the relevant resources for sidelink positioning include at least one of: ranging and sidelink positioning protocol transmission resources, or sidelink positioning resources.

In some embodiments, the sidelink positioning request information includes at least one of: a role of the terminal, an identifier of the terminal, a transaction identifier for sidelink positioning, a service type for sidelink positioning, a QoS for sidelink positioning, transmission characteristic information of a sidelink positioning reference signal, transmission stop information of a sidelink positioning reference signal, or information of a cell where a sidelink positioning terminal is located.

In some embodiments, the transmission characteristic information of the sidelink positioning reference signal includes at least one of: cell information, bandwidth information, a transmission type, transmission information, a start time, a duration, or an end time.

In some embodiments, the authorization information for the terminal includes at least one of: role information authorized to the terminal, authorized transmission service quality information, or authorized positioning service quality information.

In some embodiments, the method further includes at least one of: determining to allocate the relevant resources for sidelink positioning to the terminal, and sending configuration information for the relevant resources for sidelink positioning to the second node; or determining not to allocate the relevant resources for sidelink positioning to the terminal, and sending allocation failure information for the relevant resources for sidelink positioning to the second node.

In some embodiments, the configuration information and/or the allocation failure information are carried in at least one of:
a new radio positioning protocol A message, where the first node includes an access network device and the second node includes a core network device;
a next generation application protocol (NGAP) message, where the first node includes an access network device and the second node includes a core network device;
a signaling, where the first node includes an access network device and the second node includes the terminal; or
an F1 application protocol (F1AP) message, where the first node includes a next generation Node B-distributed unit (gNB-DU) in a radio access network separation architecture, and the second node includes a next generation Node B-centralized unit (gNB-CU) or a next generation Node B-centralized unit-control plane (gNB-CU-CP) in the radio access network separation architecture.

In some embodiments, the resource determination method further includes: sending information for the relevant resources used by the terminal for sidelink positioning to a third node.

In some embodiments, sending the information for the relevant resources used by the terminal for sidelink positioning to the third node includes: sending the information for the relevant resources used by the terminal for sidelink positioning to the third node via a fourth node.

In some embodiments, the first information is carried in at least one of:
an NGAP message, where the first node includes an access network device and the second node includes a core network device;
an F1AP message, where the first node includes a gNB-DU in a radio access network separation architecture, and the second node includes a gNB-CU or a gNB-CU-CP in the radio access network separation architecture;
an XnAP message, where the first node includes a target base station in a handover procedure and the second node includes a source base station in the handover procedure, or the first node includes a new serving base station and the second node includes a last serving base station;
a new radio positioning protocol A message, where the first node includes an access network device and the second node includes a core network device; or
a signaling, where the first node includes an access network device and the second node includes the terminal.

For specific examples of the embodiments shown in FIG. 1B, reference may be made to the following contents, which will not be repeated here.

In a first aspect, embodiments of the present disclosure provide a resource determination method. FIG. 2 is a schematic flowchart illustrating a resource determination method according to an embodiment of the present disclosure. The resource determination method shown in this embodiment may be performed by a first node, which includes, but is not limited to, an access network device. The first node may communicate with a second node, which includes, but is not limited to, at least one of a terminal or a core network device.

As shown in FIG. 2, the resource determination method may include the following step.

At step S201, relevant resources used by a terminal for sidelink positioning are determined based on first information received from a second node.

It should be noted that the embodiments shown in FIG. 2 may be implemented independently or in combination with at least one other embodiment in the present disclosure. The specific choice may be made as needed, which is not limited in the present disclosure.

According to the embodiments of the present disclosure, the first node receives first information from the second node, and then determines the relevant resources used by the terminal for sidelink positioning based on the first information. Accordingly, the first node may determine the relevant resources used by the terminal for sidelink positioning based on external information, i.e., the first information from the second node. This helps to ensure that the determined relevant resources used by the terminal for sidelink positioning may be well applied to the terminal, thereby ensuring the positioning effect of sidelink positioning by the terminal based on the resources.

In some embodiments, the relevant resources for sidelink positioning include at least one of:
ranging and sidelink positioning protocol (RSPP) transmission resources, where it should be noted that the RSPP may also be called a Sidelink Positioning Protocol (SLPP); or
sidelink positioning resources.

For example, the ranging and sidelink positioning protocol transmission resources are used by the terminal to transmit positioning and sidelink related information (e.g., interaction of positioning capabilities, terminal discovery, terminal selection, negotiation of positioning methods, negotiation of positioning resources, transmission of positioning measurement results, and the like), and the sidelink positioning resources are used by the terminal to send and/or receive reference signals for positioning during the sidelink positioning process (e.g., sidelink positioning reference signals).

In some embodiments, the sidelink positioning resource includes at least one of:
frequency information of a sidelink positioning reference signal, such as a bandwidth or a frequency point; or
time information of a sidelink positioning reference signal, such as a start position or a duration of a transmission.

In some embodiments, the first information includes at least one of:
sidelink positioning request information; or
authorization information for the terminal.

It should be noted that when the first information includes sidelink positioning request information and authorization information for the terminal, the sidelink positioning request information and the authorization information for the terminal may come from the same node. In this case, the first node may be a single node. However, when the sidelink positioning request information and the authorization information for the terminal come from different nodes, the first node may be multiple nodes. For example, the first node may include the terminal and the core network device.

In some embodiments, the first information is carried in at least one of:
an NGAP message, where the first node includes an access network device and the second node includes a core network device;
an F1AP message, where the first node includes a gNB-DU in a radio access network separation architecture, and the second node includes a gNB-CU or a gNB-CU-CP in the radio access network separation architecture;
an XnAP message, where the first node includes a target base station in a handover procedure and the second node includes a source base station in the handover procedure, or the first node includes a new serving base station and the second node includes a last serving base station;
a new radio positioning protocol A message, where the first node includes an access network device and the second node includes a core network device; or
a signaling, where the first node includes an access network device and the second node includes the terminal.

In some embodiments, the first node includes at least one of: an access network device (e.g., a base station) or a gNB-DU in a radio access network separation architecture.

In some embodiments, the second node includes at least one of: an access network device (e.g., a base station), a terminal, a core network device, a gNB-CU in a radio access network separation architecture, or a gNB-CU-CP in a radio access network separation architecture.

The following examples illustrate the situation where the first information includes sidelink positioning request information.

For example, when the first information includes sidelink positioning request information, and the first node includes an access network device and the second node includes a core network device, such as a Location Management Function (LMF), the second node may send the sidelink positioning request information to the first node in a new radio positioning protocol A (NRPPA) message.

The NRPPA message may be an NRPPA message related to the terminal, for example, the NRPPA message includes at least one of: a positioning information request from the terminal, or a sidelink positioning configuration request from the terminal.

For example, when the first information includes sidelink positioning request information, and the first node includes an access network device and the second node includes a terminal, the second node may send the sidelink positioning request information to the first node in a signaling.

The signaling includes at least one of: a Radio Resource Control (RRC) signaling, a physical layer signaling (e.g., Downlink Control Information (DCI)), or a media access control layer signaling (e.g., Media Access Control-Control Element (MAC CE)).

For example, when the first information includes sidelink positioning request information, and the first node includes a gNB-DU in the radio access network separation architecture, and the second node includes a gNB-CU or a gNB-CU-CP in the radio access network separation architecture, the second node may send the sidelink positioning request information to the first node in the F1AP message.

The F1AP message may be an F1AP message related to the terminal, for example, the F1AP message includes at least one of: a positioning information request from the terminal, or a sidelink positioning configuration request from the terminal.

For example, when the first information includes sidelink positioning request information, and the first node includes an access network device and the second node includes a core network device, such as an Access and Mobility Management Function (AMF), the second node may send the sidelink positioning request information to the first node in an NGAP message.

The NGAP message may be an NGAP message related to the terminal, for example, the NGAP message includes at least one of: a context establishment request from the terminal, or a context modification request from the terminal.

The following examples illustrate the situation where the first information includes authorization information for the terminal.

For example, when the first information includes authorization information for the terminal, and the first node includes an access network device and the second node includes a core network device, such as an AMF, the second node may send the authorization information for the terminal to the first node in the NGAP message.

The NGAP message may be an NGAP message related to the terminal, for example, the NGAP message includes at least one of: a context establishment request from the terminal, or a context modification request from the terminal.

For example, when the first information includes authorization information for the terminal, and the first node includes a gNB-DU in the radio access network separation architecture, and the second node includes a gNB-CU or a gNB-CU-CP in the radio access network separation architecture, the second node may send the sidelink positioning request information to the first node in the F1AP message, and the second node may send the authorization information for the terminal to the first node in the F1AP message.

The F1AP message may be an F1AP message related to the terminal, for example, the F1AP message includes at least one of: a context establishment request from the terminal, or a context modification request from the terminal.

For example, when the terminal may perform a handover operation and the first information includes authorization information for the terminal, the first node may include a target base station corresponding to a target cell to which the terminal needs to hand over, and the second node may include a source base station corresponding to a source cell where the terminal is located before the handover. The second node may send the authorization information for the terminal to the first node in an Xn application protocol (XnAP) message.

The XnAP message may be an XnAP message related to the terminal, for example, the XnAP message includes a handover request.

For example, the terminal (e.g., in an inactive state) may change its serving base station. When the first information includes authorization information for the terminal, the first node may include the changed serving base station, also known as the new serving base station. The second node may include a serving base station before the terminal changes its serving base station, also known as the last serving base station. The second node may send the authorization information for the terminal to the first node in an XnAP message.

The XnAP message may be an XnAP message related to the terminal, for example, the XnAP message includes a context feedback message for the terminal.

The following examples illustrate the specific content of the sidelink positioning request information.

In some embodiments, the sidelink positioning request information includes at least one of:
a role of the terminal,
an identifier of the terminal,
a transaction identifier for sidelink positioning,
a service type for sidelink positioning,
a QoS for sidelink positioning,
transmission characteristic information of a sidelink positioning reference signal (PRS),
transmission stop information of a sidelink positioning reference signal, or
information of a cell where a sidelink positioning terminal is located.

In some embodiments, the role of the terminal (also referred to as the type of terminal) refers to the role of the terminal in a sidelink positioning procedure or task. For example, the role includes at least one of: an anchor UE, a target UE, a location UE, and a server UE; or the role includes at least one of: a server UE only, a server UE or a non-sidelink positioning UE, or a sidelink positioning UE, where the sidelink positioning UE includes terminals participating in sidelink positioning, such as an anchor UE and a target UE. The first node may determine the relevant resources used by the terminal for sidelink positioning based on the role of the terminal.

It should be noted that in the embodiments of the present disclosure, the anchor UE, the target UE, and the location UE may also be referred to as a reference terminal (UE).

In some embodiments, the role of the terminal may be classified according to whether it participates in sidelink positioning (i.e., whether it receives and/or sends a sidelink positioning reference signal). For example, terminals participating in sidelink positioning (e.g., an anchor UE, a location UE, or a target UE) need to be allocated sidelink positioning reference signal resources, while terminals not participating in sidelink positioning (e.g., a server UE or a client UE) cannot be allocated sidelink positioning reference signal resources.

In some embodiments, the role of the terminal may be classified according to whether it receives or sends a sidelink positioning reference signal. For example, a terminal that needs to send a sidelink positioning reference signal needs to be allocated corresponding sidelink positioning reference signal resources, while a terminal that only receives a sidelink positioning reference signal cannot be allocated sidelink positioning reference signal resources (e.g., resources for sending the sidelink positioning reference signal).

In some embodiments, the role of the terminal may be classified according to whether it needs to interact via the RSPP protocol. For example, terminals that need to interact via the RSPP protocol need to be allocated corresponding RSPP resources, while terminals that do not need to interact via the RSPP protocol (e.g., terminals that only send and receive sidelink positioning reference signals and interact via the network) cannot be allocated RSPP protocol resources.

In some embodiments, the role of the terminal may be classified according to whether it receives and/or sends a sidelink positioning reference signal. For example, the role of the terminal includes at least one of: a sidelink transmission point (TP), a sidelink reception point (RP), and a sidelink transmission-reception point (TRP).

In some embodiments, the identifier of the terminal may be used to uniquely identify a specific terminal. For example, the identifier of the terminal may be the identifier (ID) of a cell where the terminal is located, or may be a cell-radio network temporary identifier (C-RNTI) allocated to the terminal. The first node may determine the relevant resources used by the terminal for sidelink positioning based on the identifier of the terminal.

In some embodiments, the transaction identifier for sidelink positioning, also known as the service identifier or transaction identifier, may be used to identify a specific sidelink positioning task. The first node may determine the relevant resources used by the terminal for sidelink positioning based on the transaction identifier for the sidelink positioning.

In some embodiments, the service type for sidelink positioning may be used to indicate the service type used for sidelink positioning, and the service type includes at least one of: vehicle to everything (V2X) or proximity services (ProSe) identifiers. The first node may determine the relevant resources used by the terminal for sidelink positioning based on the service type for sidelink positioning.

In some embodiments, the QoS for sidelink positioning may be used to indicate the quality of service required for sidelink positioning. The first node may determine the relevant resources used by the terminal for sidelink positioning based on the QoS for sidelink positioning.

In some embodiments, the QoS for sidelink positioning includes range requirements, and the first node may determine the relevant resources used by the terminal for sidelink positioning based on the QoS for sidelink positioning.

In some embodiments, the transmission stop information of the sidelink positioning reference signal may be used to determine when the first node releases the specific sidelink positioning reference signal resource allocated to the terminal or to determine the time when the specific sidelink positioning reference signal resource allocated to the terminal is used. The first node may determine the relevant resources used by the terminal for sidelink positioning based on the transmission stop information of the sidelink positioning reference signal.

In some embodiments, the information of the cell where the sidelink positioning terminal is located may also be referred to as the information of the cell where the terminal participating in the sidelink positioning is located. The first node may send the relevant resources used by the terminal for sidelink positioning to the third node based on the information of the cell where the sidelink positioning terminal is located.

For example, the first node may determine, based on the information of the cell where the sidelink positioning terminal, that the base station corresponding to the cell where the anchor terminal participating in the sidelink positioning is located is located is the first node, and the base station corresponding to the cell where the target terminal participating in the sidelink positioning is located is the third node. After determining the relevant resources used by the anchor terminal for sidelink positioning, the first node may send the information for the relevant resources used by the anchor terminal for sidelink positioning to the third node, so that the third node may avoid conflicts with the relevant resources used by the anchor terminal for sidelink positioning when determining the relevant resources used by the target terminal for sidelink positioning.

In some embodiments, the transmission characteristic information of the sidelink positioning reference signal includes at least one of: cell information, bandwidth information, a transmission type, transmission information, a start time, a duration, or an end time. The first node may determine the relevant resources used by the terminal for sidelink positioning based on the transmission characteristic information of the sidelink positioning reference signal, so as to improve the resource utilization efficiency and avoid interference.

In some embodiments, the authorization information for the terminal includes at least one of:
role information authorized to the terminal,
authorized transmission service quality information, or
authorized positioning service quality information.

In some embodiments, the role information authorized to the terminal may be used to indicate whether the first node terminal is authorized as a specific role. When the terminal is authorized as a specific role, the first node may determine relevant information such as services, resources, and QoS corresponding to the specific role, and then determine the relevant resources used by the terminal for sidelink positioning based on the relevant information.

It should be noted that the role information authorized to the terminal may include not only the roles described in the previous embodiments, but also other roles, such as roles that are allowed to receive and/or send specific resources, which may include at least one of: a terminal that is allowed to receive sidelink positioning reference signal resources, a terminal that is allowed to send sidelink positioning reference signal resources, a terminal that is allowed to receive and send sidelink positioning reference signal resources, or a terminal that is allowed to use ranging and sidelink positioning protocol resources. Distinguishing terminals based on their roles helps the first node allocate resources more rationally and accurately. For example, for terminals that are allowed to receive sidelink positioning reference signal resources, the first node may allocate resources for receiving sidelink positioning reference signals; and for terminals that are allowed to send sidelink positioning reference signal resources, the first node may allocate resources for sending sidelink positioning reference signals.

In some embodiments, the authorized transmission service quality information may be used by the first node to determine the sidelink positioning protocol transmission resources for the terminal.

For example, the authorized transmission service quality information may include a mapping table between sidelink positioning services and sidelink transmission service quality parameters, where the type of the sidelink positioning service may be, for example, V2X or ProSe.

In some embodiments, the first node may determine the sidelink positioning protocol transmission resources based on the authorized transmission service quality information and the sidelink positioning service type.

In some embodiments, the first node may use the authorized transmission service quality information as the default service quality of the terminal to determine the sidelink positioning protocol transmission resources of the terminal in a single sidelink positioning task.

In some embodiments, the authorized location service quality information may be used by the first node to determine the sidelink positioning reference signal resources for the terminal.

For example, the authorized positioning service quality information may include a mapping table between sidelink positioning services and sidelink positioning service quality parameters. The type of the sidelink positioning service may be, for example, V2X or ProSe.

In some embodiments, the first node may determine the sidelink positioning reference signal resources based on the authorized positioning service quality information and the sidelink positioning service type.

In some embodiments, the first node may use the authorized positioning service quality information as the default service quality of the terminal to determine the sidelink positioning reference signal resources of the terminal in a single sidelink positioning task.

FIG. 3 is a schematic flowchart illustrating another resource determination method according to an embodiment of the present disclosure. The method shown in this embodiment may be performed by a first node. As shown in FIG. 3, the resource determination method further includes at least one of the following steps.

At step S301, it is determined to allocate the relevant resources for sidelink positioning to the terminal, and configuration information for the relevant resources for sidelink positioning is sent to the second node; and it is determined not to allocate the relevant resources for sidelink positioning to the terminal, and allocation failure information for the relevant resources for sidelink positioning is sent to the second node.

It should be noted that the embodiments shown in FIG. 3 may be implemented independently or in combination with at least one other embodiment in the present disclosure. The specific choice may be made as needed, which is not limited in the present disclosure.

In some embodiments, determining, by the first node, the relevant resources used by the terminal for sidelink positioning based on the first information may include determining to allocate the relevant resources for sidelink positioning to the terminal, or determining not to allocate the relevant resources for sidelink positioning to the terminal. When it is determined to allocate the relevant resources for sidelink positioning to the terminal, specific ranging and sidelink positioning protocol transmission resources and/or sidelink positioning resources may be determined based on the first information.

For example, the first node determines to allocate the relevant resources for sidelink positioning to the terminal based on the first information, and may send the configuration information for the determined relevant resources for sidelink positioning to the second node. The configuration information may be used as a response message to the first information, so that the second node may determine the relevant resources used by the terminal for sidelink positioning based on the configuration information.

For example, the first node determines not to allocate the relevant resources for sidelink positioning to the terminal based on the first information, and may send allocation failure information for the relevant resources for sidelink positioning to the second node. The allocation failure information may be used as a response message to the first information, so that the second node may determine that the allocation of the relevant resources used by the terminal for sidelink positioning has failed based on the allocation failure information. The failure message may also include the specific reason for the failure, such as authorization failure or resource unavailability.

In some embodiments, the configuration information and/or the allocation failure information are carried in at least one of:
a new radio positioning protocol A message, where the first node includes an access network device and the second node includes a core network device;
an NGAP message, where the first node includes an access network device and the second node includes a core network device;
a signaling, where the first node includes an access network device and the second node includes the terminal; or
an F1AP message, where the first node includes a gNB-DU in a radio access network separation architecture, and the second node includes a gNB-CU or a gNB-CU-CP in the radio access network separation architecture.

For example, the first node includes an access network device, the second node includes an LMF, and the first node may send the configuration information or allocation failure information to the second node in an NRPPA message.

The NRPPA message may be an NRPPA message related to the terminal. For example, when it is determined to allocate the relevant resources for sidelink positioning to the terminal, the NRPPA message includes at least one of: a positioning information feedback message or a sidelink positioning configuration feedback message; for example, when it is determined not to allocate the relevant resources for sidelink positioning to the terminal, the NRPPA message includes at least one of: a positioning information request failure message or a sidelink positioning configuration failure message.

For example, the first node includes an access network device, the second node includes the terminal, and the first node may send the configuration information or allocation failure information to the second node in a signaling. The signaling may be, for example, an RRC signaling, DCI, an MAC CE, or the like.

For example, the first node includes a gNB-DU in the radio access network separation architecture, and the second node includes a gNB-CU or a gNB-CU-CP in the radio access network separation architecture. The first node may send the configuration information or allocation failure information to the second node in an F1AP message.

The F1AP message may be an F1AP message related to the terminal. For example, when it is determined to allocate the relevant resources for sidelink positioning to the terminal, the F1AP message includes at least one of: a positioning information feedback message or a sidelink positioning configuration feedback message; for example, when it is determined not to allocate the relevant resources for sidelink positioning to the terminal, the F1AP message includes at least one of: a positioning information request failure message or a sidelink positioning configuration failure message.

For example, the first node includes an access network device, the second node includes an AMF, and the first node may send configuration information or allocation failure information to the second node in an NGAP message. The NGAP message may be an NGAP message related to the terminal. For example, when it is determined to allocate the relevant resources for sidelink positioning to the terminal, the NGAP message includes at least one of: a context establishment feedback message for the terminal or a context modification feedback message for the terminal; for example, when it is determined not to allocate the relevant resources for sidelink positioning to the terminal, the NGAP message includes at least one of: a context establishment failure message for the terminal or a context modification failure message for the terminal.

It should be noted that when the second node is a terminal, the terminal may determine the relevant resources for sidelink positioning based on the configuration information, and then participate in sidelink positioning based on the determined relevant resources. When the second node is not a terminal, upon receiving the configuration information, the second node may determine the resources based on the configuration information as needed, or send the configuration information to the terminal so that the terminal may determine the relevant resources for sidelink positioning. Alternatively, when the second node receives the allocation failure information, the second node may determine the resources based on the allocation failure information as needed, or send the allocation failure information to the terminal so that the terminal may determine that the allocation of the relevant resources for sidelink positioning has failed.

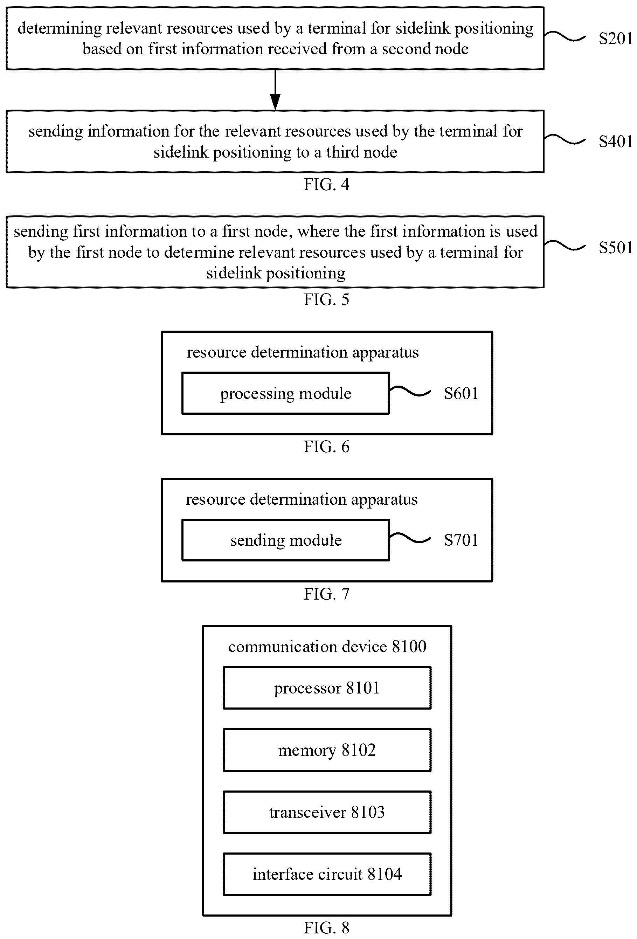

FIG. 4 is a schematic flowchart illustrating yet another resource determination method according to an embodiment of the present disclosure. The method shown in this embodiment may be performed by the first node. As shown in FIG. 4, the resource determination method further includes the following step.

At step S401, information for the relevant resources used by the terminal for sidelink positioning is sent to the third node.

It should be noted that the embodiments shown in FIG. 4 may be implemented independently or in combination with at least one other embodiment in the present disclosure. The specific choice may be made as needed, which is not limited in the present disclosure.

In some embodiments, the first node may send information for the relevant resources used by the terminal for sidelink positioning (such as configuration information or allocation failure information) to the third node, where the third node is different from the second node.

For example, the first node may determine that the base stations corresponding to the cells where multiple terminals participating in the sidelink positioning are located are different, based on the information of the cell where the sidelink positioning terminal is located.

For example, if the base station corresponding to the cell where the anchor terminal participating in sidelink positioning is located is the first node, and the base station corresponding to the cell where the target terminal participating in sidelink positioning is located is the third node, then after the first node determines the relevant resources used by the anchor terminal for sidelink positioning, it may send the information for the relevant resources used by the anchor terminal for sidelink positioning to the third node.

For another example, if the base station corresponding to the cell where the target terminal participating in sidelink positioning is located is the first node, and the base station corresponding to the cell where the anchor terminal participating in sidelink positioning is located is the third node, then after the first node determines the relevant resources used by the target terminal for sidelink positioning, it may send the information for the relevant resources used by the target terminal for sidelink positioning to the third node.

When the information for the relevant resources used by the terminal for sidelink positioning includes configuration information, the third node may avoid conflicts with the relevant resources used by the anchor terminal for sidelink positioning when determining the relevant resources used by the target terminal for sidelink positioning based on the configuration information.

When the information for the relevant resources used by the terminal for sidelink positioning includes allocation failure information, the third node may determine the relevant resources used by the target terminal for sidelink positioning based on the allocation failure information without considering the relevant resources used by the anchor terminal for sidelink positioning.

In some embodiments, the first node and the second node are different base stations. The first node may send information for the relevant resources used by the terminal for sidelink positioning to the third node in an XnAP message.

The XnAP message may be a message related to or not related to the terminal. For example, the XnAP message includes at least one of: an interface establishment related message, a radio access network (RAN) configuration update related message, or a sidelink configuration notification message.

In some embodiments, sending the information for the relevant resources used by the terminal for sidelink positioning to the third node includes: sending the information for the relevant resources used by the terminal for sidelink positioning to the third node via a fourth node.

Sending, by the first node, the information for the relevant resources used by the terminal for sidelink positioning to the third node may be done by directly sending the information for the resources used by the terminal for sidelink positioning to the third node, as described in the previous embodiment, or by sending the information for the resources used by the terminal for sidelink positioning to the third node via the fourth node.

It should be noted that the fourth node and the second node may be the same node or different nodes.

For example, when the fourth node is an LMF, the information for the relevant resources used by the terminal for sidelink positioning may be sent to the third node via an NRPPA message. The NRPPA message may be a message related to or not related to the terminal, for example, the NRPPA message may be a sidelink configuration notification message.

It should be noted that the above embodiments regarding the first node, the second node, the third node, and the fourth node are merely illustrative examples, and the situations regarding the first node, the second node, the third node, and the fourth node are not limited to the above embodiments.

In a second aspect, embodiments of the present disclosure provide a resource determination method. FIG. 5 is a schematic flowchart illustrating a resource determination method according to an embodiment of the present disclosure. The resource determination method shown in this embodiment may be performed by a second node, which includes, but is not limited to, at least one of a terminal or a core network device. The first node may communicate with the second node, and the first node includes, but is not limited to, an access network device.

As shown in FIG. 5, the resource determination method may include the following step.

At step S501, first information is sent to the first node, where the first information is used by the first node to determine relevant resources used by a terminal for sidelink positioning.

It should be noted that the embodiments shown in FIG. 5 may be implemented independently or in combination with at least one other embodiment in the present disclosure. The specific choice may be made as needed, which is not limited in the present disclosure.

According to the embodiments of the present disclosure, the second node may send first information to the first node, and the first information is used by the first node to determine relevant resources used by the terminal for sidelink positioning. Accordingly, the first node may determine the relevant resources used by the terminal for sidelink positioning based on external information, i.e., the first information from the second node. This helps to ensure that the determined relevant resources used by the terminal for sidelink positioning may be well applied to the terminal, thereby ensuring the positioning effect of sidelink positioning by the terminal based on the resources.

In some embodiments, the relevant resources for sidelink positioning include at least one of:
ranging and sidelink positioning protocol transmission resources, where it should be noted that the RSPP may also be called a Sidelink Positioning Protocol; or
sidelink positioning resources.

For example, the ranging and sidelink positioning protocol transmission resources are used by the terminal to transmit positioning and sidelink related information (e.g., interaction of positioning capabilities, terminal discovery, terminal selection, negotiation of positioning methods, negotiation of positioning resources, transmission of positioning measurement results, and the like), and the sidelink positioning resources are used by the terminal to send and/or receive reference signals for positioning during the sidelink positioning process (e.g., sidelink positioning reference signals).

In some embodiments, the sidelink positioning resource includes at least one of:
frequency information of a sidelink positioning reference signal, such as a bandwidth or a frequency point; or
time information of a sidelink positioning reference signal, such as a start position or a duration of a transmission.

In some embodiments, the first information includes at least one of:
sidelink positioning request information; or
authorization information for the terminal.

It should be noted that when the first information includes sidelink positioning request information and authorization information for the terminal, the sidelink positioning request information and the authorization information for the terminal may come from the same node. In this case, the first node may be a single node. However, when the sidelink positioning request information and the authorization information for the terminal come from different nodes, the first node may be multiple nodes. For example, the first node may include the terminal and the core network device.

In some embodiments, the first information is carried in at least one of:
an NGAP message, where the first node includes an access network device and the second node includes a core network device;
an F1AP message, where the first node includes a gNB-DU in a radio access network separation architecture, and the second node includes a gNB-CU or a gNB-CU-CP in the radio access network separation architecture;
an XnAP message, where the first node includes a target base station in a handover procedure and the second node includes a source base station in the handover procedure, or the first node includes a new serving base station and the second node includes a last serving base station;
a new radio positioning protocol A message, where the first node includes an access network device and the second node includes a core network device; or
a signaling, where the first node includes an access network device and the second node includes the terminal.

In some embodiments, the first node includes at least one of: an access network device (e.g., a base station) or a gNB-DU in a radio access network separation architecture.

In some embodiments, the second node includes at least one of: an access network device (e.g., a base station), a terminal, a core network device, a gNB-CU in a radio access network separation architecture, or a gNB-CU-CP in a radio access network separation architecture.

The following examples illustrate the situation where the first information includes sidelink positioning request information.

For example, when the first information includes sidelink positioning request information, and the first node includes an access network device and the second node includes a core network device, such as a Location Management Function (LMF), the second node may send the sidelink positioning request information to the first node in a new radio positioning protocol A (NRPPA) message.

The NRPPA message may be an NRPPA message related to the terminal, for example, the NRPPA message includes at least one of: a positioning information request from the terminal, or a sidelink positioning configuration request from the terminal.

For example, when the first information includes sidelink positioning request information, and the first node includes an access network device and the second node includes a terminal, the second node may send the sidelink positioning request information to the first node in a signaling.

The signaling includes at least one of: a Radio Resource Control (RRC) signaling, a physical layer signaling (e.g., Downlink Control Information (DCI)), or a media access control layer signaling (e.g., Media Access Control-Control Element (MAC CE)).

For example, when the first information includes sidelink positioning request information, and the first node includes a gNB-DU in the radio access network separation architecture, and the second node includes a gNB-CU or a gNB-CU-CP in the radio access network separation architecture, the second node may send the sidelink positioning request information to the first node in the F1AP message.

The F1AP message may be an F1AP message related to the terminal, for example, the F1AP message includes at least one of: a positioning information request from the terminal, or a sidelink positioning configuration request from the terminal.

For example, when the first information includes sidelink positioning request information, and the first node includes an access network device and the second node includes a core network device, such as an Access and Mobility Management Function (AMF), the second node may send the sidelink positioning request information to the first node in an NGAP message.

The NGAP message may be an NGAP message related to the terminal, for example, the NGAP message includes at least one of: a context establishment request from the terminal, or a context modification request from the terminal.

The following examples illustrate the situation where the first information includes authorization information for the terminal.

For example, when the first information includes authorization information for the terminal, and the first node includes an access network device and the second node includes a core network device, such as an AMF, the second node may send the authorization information for the terminal to the first node in the NGAP message.

The NGAP message may be an NGAP message related to the terminal, for example, the NGAP message includes at least one of: a context establishment request from the terminal, or a context modification request from the terminal.

For example, when the first information includes authorization information for the terminal, and the first node includes a gNB-DU in the radio access network separation architecture, and the second node includes a gNB-CU or a gNB-CU-CP in the radio access network separation architecture, the second node may send the sidelink positioning request information to the first node in the F1AP message, and the second node may send the authorization information for the terminal to the first node in the F1AP message.

The F1AP message may be an F1AP message related to the terminal, for example, the F1AP message includes at least one of: a context establishment request from the terminal, or a context modification request from the terminal.

For example, when the terminal may perform a handover operation and the first information includes authorization information for the terminal, the first node may include a target base station corresponding to a target cell to which the terminal needs to hand over, and the second node may include a source base station corresponding to a source cell where the terminal is located before the handover. The second node may send the authorization information for the terminal to the first node in an Xn application protocol (XnAP) message.

The XnAP message may be an XnAP message related to the terminal, for example, the XnAP message includes a handover request.

For example, the terminal (e.g., in an inactive state) may change its serving base station. When the first information includes authorization information for the terminal, the first node may include the changed serving base station, also known as the new serving base station. The second node may include a serving base station before the terminal changes its serving base station, also known as the last serving base station. The second node may send the authorization information for the terminal to the first node in an XnAP message.

The XnAP message may be an XnAP message related to the terminal, for example, the XnAP message includes a context feedback message for the terminal.

The following examples illustrate the specific content of the sidelink positioning request information.

In some embodiments, the sidelink positioning request information includes at least one of:
a role of the terminal,
an identifier of the terminal,
a transaction identifier for sidelink positioning,
a service type for sidelink positioning,
a QoS for sidelink positioning,
transmission characteristic information of a sidelink positioning reference signal,
transmission stop information of a sidelink positioning reference signal, or
information of a cell where a sidelink positioning terminal is located.

In some embodiments, the role of the terminal (also referred to as the type of terminal) refers to the role of the terminal in a sidelink positioning procedure or task. For example, the role includes at least one of: an anchor UE, a target UE, a location UE, and a server UE; or the role includes at least one of: a server UE only, a server UE or a non-sidelink positioning UE, or a sidelink positioning UE, where the sidelink positioning UE includes terminals participating in sidelink positioning, such as an anchor UE and a target UE. The first node may determine the relevant resources used by the terminal for sidelink positioning based on the role of the terminal.

It should be noted that in the embodiments of the present disclosure, the anchor UE, the target UE, and the location UE may also be referred to as a reference terminal (UE).

In some embodiments, the role of the terminal may be classified according to whether it participates in sidelink positioning (i.e., whether it receives and/or sends a sidelink positioning reference signal). For example, terminals participating in sidelink positioning (e.g., an anchor UE, a location UE, or a target UE) need to be allocated sidelink positioning reference signal resources, while terminals not participating in sidelink positioning (e.g., a server UE or a client UE) cannot be allocated sidelink positioning reference signal resources.

In some embodiments, the role of the terminal is classified according to whether it receives or sends a sidelink positioning reference signal. For example, a terminal that needs to send a sidelink positioning reference signal needs to be allocated corresponding sidelink positioning reference signal resources, while a terminal that only receives a sidelink positioning reference signal cannot be allocated sidelink positioning reference signal resources (e.g., resources for sending the sidelink positioning reference signal).

In some embodiments, the role of the terminal may be classified according to whether it needs to interact via the RSPP protocol. For example, terminals that need to interact via the RSPP protocol need to be allocated corresponding RSPP resources, while terminals that do not need to interact via the RSPP protocol (e.g., terminals that only send and receive sidelink positioning reference signals and interact via the network) cannot be allocated RSPP protocol resources.

In some embodiments, the role of the terminal may be classified according to whether it receives and/or sends a sidelink positioning reference signal. For example, the role of the terminal includes at least one of: a sidelink TP, a sidelink RP, and a sidelink TRP.

In some embodiments, the identifier of the terminal may be used to uniquely identify a specific terminal. For example, the identifier of the terminal may be the ID of a cell where the terminal is located, or may be a C-RNTI allocated to the terminal. The first node may determine the relevant resources used by the terminal for sidelink positioning based on the identifier of the terminal.

In some embodiments, the transaction identifier for sidelink positioning, also known as the service identifier or transaction identifier, may be used to identify a specific sidelink positioning task. The first node may determine the relevant resources used by the terminal for sidelink positioning based on the transaction identifier for the sidelink positioning.

In some embodiments, the service type for sidelink positioning may be used to indicate the service type used for sidelink positioning, and the service type includes at least one of: V2X or ProSe identifiers. The first node may determine the relevant resources used by the terminal for sidelink positioning based on the service type for sidelink positioning.

In some embodiments, the QoS for sidelink positioning may be used to indicate the quality of service required for sidelink positioning. The first node may determine the relevant resources used by the terminal for sidelink positioning based on the QoS for sidelink positioning.

In some embodiments, the QoS for sidelink positioning includes range requirements, and the first node may determine the relevant resources used by the terminal for sidelink positioning based on the QoS for sidelink positioning.

In some embodiments, the transmission stop information of the sidelink positioning reference signal may be used to determine when the first node releases the specific sidelink positioning reference signal resource allocated to the terminal or to determine the time when the specific sidelink positioning reference signal resource allocated to the terminal is used. The first node may determine the relevant resources used by the terminal for sidelink positioning based on the transmission stop information of the sidelink positioning reference signal.

In some embodiments, the information of the cell where the sidelink positioning terminal is located may also be referred to as the information of the cell where the terminal participating in the sidelink positioning is located. The first node may send the relevant resources used by the terminal for sidelink positioning to the third node based on the information of the cell where the sidelink positioning terminal is located.

For example, the first node may determine, based on the information of the cell where the sidelink positioning terminal, that the base station corresponding to the cell where the anchor terminal participating in the sidelink positioning is located is located is the first node, and the base station corresponding to the cell where the target terminal participating in the sidelink positioning is located is the third node. After determining the relevant resources used by the anchor terminal for sidelink positioning, the first node may send the information for the relevant resources used by the anchor terminal for sidelink positioning to the third node, so that the third node may avoid conflicts with the relevant resources used by the anchor terminal for sidelink positioning when determining the relevant resources used by the target terminal for sidelink positioning.

In some embodiments, the transmission characteristic information of the sidelink positioning reference signal includes at least one of: cell information, bandwidth information, a transmission type, transmission information, a start time, a duration, or an end time. The first node may determine the relevant resources used by the terminal for sidelink positioning based on the transmission characteristic information of the sidelink positioning reference signal, so as to improve the resource utilization efficiency and avoid interference.

In some embodiments, the authorization information for the terminal includes at least one of:
role information authorized to the terminal,
authorized transmission service quality information, or
authorized positioning service quality information.

In some embodiments, the role information authorized to the terminal may be used to indicate whether the first node terminal is authorized as a specific role. When the terminal is authorized as a specific role, the first node may determine relevant information such as services, resources, and QoS corresponding to the specific role, and then determine the relevant resources used by the terminal for sidelink positioning based on the relevant information.

It should be noted that the role information authorized to the terminal may include not only the roles described in the previous embodiments, but also other roles, such as roles that are allowed to receive and/or send specific resources, which may include at least one of: a terminal that is allowed to receive sidelink positioning reference signal resources, a terminal that is allowed to send sidelink positioning reference signal resources, a terminal that is allowed to receive and send sidelink positioning reference signal resources, or a terminal that is allowed to use ranging and sidelink positioning protocol resources. Distinguishing terminals based on their roles helps the first node allocate resources more rationally and accurately. For example, for terminals that are allowed to receive sidelink positioning reference signal resources, the first node may allocate resources for receiving sidelink positioning reference signals; and for terminals that are allowed to send sidelink positioning reference signal resources, the first node may allocate resources for sending sidelink positioning reference signals.

In some embodiments, the authorized transmission service quality information may be used by the first node to determine the sidelink positioning protocol transmission resources for the terminal.

For example, the authorized transmission service quality information may include a mapping table between sidelink positioning services and sidelink transmission service quality parameters, where the type of the sidelink positioning service may be, for example, V2X or ProSe.

In some embodiments, the first node may determine the sidelink positioning protocol transmission resources based on the authorized transmission service quality information and the sidelink positioning service type.

In some embodiments, the first node may use the authorized transmission service quality information as the default service quality of the terminal to determine the sidelink positioning protocol transmission resources of the terminal in a single sidelink positioning task.

In some embodiments, the authorized location service quality information may be used by the first node to determine the sidelink positioning reference signal resources for the terminal.

For example, the authorized positioning service quality information may include a mapping table between sidelink positioning services and sidelink positioning service quality parameters. The type of the sidelink positioning service may be, for example, V2X or ProSe.

In some embodiments, the first node may determine the sidelink positioning reference signal resources based on the authorized positioning service quality information and the sidelink positioning service type.

In some embodiments, the first node may use the authorized positioning service quality information as the default service quality of the terminal to determine the sidelink positioning reference signal resources of the terminal in a single sidelink positioning task.

In some embodiments, the resource determination method further includes at least one of the following steps:
receiving configuration information for the relevant resources for sidelink positioning sent by the first node; or
receiving allocation failure information for the relevant resources for sidelink positioning sent by the first node.

In some embodiments, determining, by the first node, the relevant resources used by the terminal for sidelink positioning based on the first information may include determining to allocate the relevant resources for sidelink positioning to the terminal, or determining not to allocate the relevant resources for sidelink positioning to the terminal. When it is determined to allocate the relevant resources for sidelink positioning to the terminal, specific ranging and sidelink positioning protocol transmission resources and/or sidelink positioning resources may be determined based on the first information.

For example, the first node determines to allocate the relevant resources for sidelink positioning to the terminal based on the first information, and the second node may receive the configuration information for the determined relevant resources for sidelink positioning determined by the first node. The configuration information may be used as a response message to the first information, so that the second node may determine the relevant resources used by the terminal for sidelink positioning based on the configuration information.

For example, the first node determines not to allocate the relevant resources for sidelink positioning to the terminal based on the first information, and the second node may receive allocation failure information for the relevant resources for sidelink positioning from the first node. The allocation failure information may be used as a response message to the first information, so that the second node may determine that the allocation of the relevant resources used by the terminal for sidelink positioning has failed based on the allocation failure information. The failure message may also include the specific reason for the failure, such as authorization failure or resource unavailability.

In some embodiments, the configuration information and/or the allocation failure information are carried in at least one of:
a new radio positioning protocol A message, where the first node includes an access network device and the second node includes a core network device;
an NGAP message, where the first node includes an access network device and the second node includes a core network device;
a signaling, where the first node includes an access network device and the second node includes the terminal; or
an F1AP message, where the first node includes a gNB-DU in a radio access network separation architecture, and the second node includes a gNB-CU or a gNB-CU-CP in the radio access network separation architecture.

For example, the first node includes an access network device, the second node includes an LMF, and the first node may send the configuration information or allocation failure information to the second node in an NRPPA message.

The NRPPA message may be an NRPPA message related to the terminal. For example, when it is determined to allocate the relevant resources for sidelink positioning to the terminal, the NRPPA message includes at least one of: a positioning information feedback message or a sidelink positioning configuration feedback message; for example, when it is determined not to allocate the relevant resources for sidelink positioning to the terminal, the NRPPA message includes at least one of: a positioning information request failure message or a sidelink positioning configuration failure message.

For example, the first node includes an access network device, the second node includes the terminal, and the first node may send the configuration information or allocation failure information to the second node in a signaling. The signaling may be, for example, an RRC signaling, DCI, an MAC CE, or the like.

For example, the first node includes a gNB-DU in the radio access network separation architecture, and the second node includes a gNB-CU or a gNB-CU-CP in the radio access network separation architecture. The first node may send the configuration information or allocation failure information to the second node in an F1AP message.

The F1AP message may be an F1AP message related to the terminal. For example, when it is determined to allocate the relevant resources for sidelink positioning to the terminal, the F1AP message includes at least one of: a positioning information feedback message or a sidelink positioning configuration feedback message; for example, when it is determined not to allocate the relevant resources for sidelink positioning to the terminal, the F1AP message includes at least one of: a positioning information request failure message or a sidelink positioning configuration failure message.

For example, the first node includes an access network device, the second node includes an AMF, and the first node may send configuration information or allocation failure information to the second node in an NGAP message. The NGAP message may be an NGAP message related to the terminal. For example, when it is determined to allocate the relevant resources for sidelink positioning to the terminal, the NGAP message includes at least one of: a context establishment feedback message for the terminal or a context modification feedback message for the terminal; for example, when it is determined not to allocate the relevant resources for sidelink positioning to the terminal, the NGAP message includes at least one of: a context establishment failure message for the terminal or a context modification failure message for the terminal.

It should be noted that when the second node is a terminal, the terminal may determine the relevant resources for sidelink positioning based on the configuration information, and then participate in sidelink positioning based on the determined relevant resources. When the second node is not a terminal, upon receiving the configuration information, the second node may determine the resources based on the configuration information as needed, or send the configuration information to the terminal so that the terminal may determine the relevant resources for sidelink positioning. Alternatively, when the second node receives the allocation failure information, the second node may determine the resources based on the allocation failure information as needed, or send the allocation failure information to the terminal so that the terminal may determine that the allocation of the relevant resources for sidelink positioning has failed.

In some embodiments, the names of information or the like are not limited to the names described in the embodiments. Terms such as "information," "message," "signal," "signaling," "report," "configuration," "indication," "instruction," "command," "channel," "parameter," "domain," "field," "symbol," "code element," "codebook," "codeword," "codepoint," "bit," "data," "program," and "chip" may be used interchangeably.

In some embodiments, terms such as "moment," "point in time," "time," and "time location" may be used interchangeably, and terms such as "duration," "time period," "time window," "window," and "time" may be used interchangeably.

In some embodiments, "acquiring," "obtaining," "getting," "receiving," "transmitting," "bidirectional transmission," and "sending and/or receiving" may be used interchangeably, and may be interpreted as receiving from other entities, obtaining from protocols, obtaining from higher layers, processing and obtaining on its/their own, autonomously implementing, or other meanings.

In some embodiments, terms such as "sending," "emitting," "reporting," "provisioning," "transmitting," "bidirectional transmission," and "sending and/or receiving" may be used interchangeably.

In some embodiments, terms such as "certain," "preset," "predetermined," "set," "indicated," "particular," "any," and "first" may be used interchangeably, such as "certain A," "preset A," "predetermined A," "set A," and "indicated A".

It should be noted that regarding other contents involved in this embodiment, reference is made to the relevant contents in the previous embodiments, which will not be repeated here.

Corresponding to the aforementioned embodiments of the resource determination method, the present disclosure further provides embodiments of a resource determination apparatus.

FIG. 6 is a schematic block diagram illustrating a resource determination apparatus according to an embodiment of the present disclosure. The resource determination apparatus is configured at a first node. As shown in FIG. 6, the resource determination apparatus includes:
a processing module 601 configured to determine relevant resources used by a terminal for sidelink positioning based on first information received from a second node.

In some embodiments, the relevant resources for sidelink positioning include at least one of: ranging and sidelink positioning protocol transmission resources, or sidelink positioning resources.

In some embodiments, the first information includes at least one of: sidelink positioning request information, or authorization information for the terminal.

In some embodiments, the sidelink positioning request information includes at least one of: a role of the terminal, an identifier of the terminal, a transaction identifier for sidelink positioning, a service type for sidelink positioning, a QoS for sidelink positioning, transmission characteristic information of a sidelink positioning reference signal, transmission stop information of a sidelink positioning reference signal, or information of a cell where a sidelink positioning terminal is located.

In some embodiments, the transmission characteristic information of the sidelink positioning reference signal includes at least one of: cell information, bandwidth information, a transmission type, transmission information, a start time, a duration, or an end time.

In some embodiments, the authorization information for the terminal includes at least one of: role information authorized to the terminal, authorized transmission service quality information, or authorized positioning service quality information.

In some embodiments, the resource determination apparatus further includes a sending module configured to perform at least one of: determining to allocate the relevant resources for sidelink positioning to the terminal, and sending configuration information for the relevant resources for sidelink positioning to the second node; or determining not to allocate the relevant resources for sidelink positioning to the terminal, and sending allocation failure information for the relevant resources for sidelink positioning to the second node.

In some embodiments, the configuration information and/or the allocation failure information are carried in at least one of:
a new radio positioning protocol A message, where the first node includes an access network device and the second node includes a core network device;
an NGAP message, where the first node includes an access network device and the second node includes a core network device;
a signaling, where the first node includes an access network device and the second node includes the terminal; or
an F1AP message, where the first node includes a gNB-DU in a radio access network separation architecture, and the second node includes a gNB-CU or a gNB-CU-CP in the radio access network separation architecture.

In some embodiments, the resource determination apparatus further includes: a sending module configured to send information for the relevant resources used by the terminal for sidelink positioning to a third node.

In some embodiments, the sending module is configured to send information for the relevant resources used by the terminal for sidelink positioning to the third node via a fourth node.

In some embodiments, the first information is carried in at least one of:
an NGAP message, where the first node includes an access network device and the second node includes a core network device;
an F1AP message, where the first node includes a gNB-DU in a radio access network separation architecture, and the second node includes a gNB-CU or a gNB-CU-CP in the radio access network separation architecture;
an XnAP message, where the first node includes a target base station in a handover procedure and the second node includes a source base station in the handover procedure, or the first node includes a new serving base station and the second node includes a last serving base station;
a new radio positioning protocol A message, where the first node includes an access network device and the second node includes a core network device; or
a signaling, where the first node includes an access network device and the second node includes the terminal.

FIG. 7 is a schematic block diagram illustrating a resource determination apparatus according to an embodiment of the present disclosure. The resource determination apparatus is configured at a second node. As shown in FIG. 7, the resource determination apparatus includes:
a sending module 701 configured to send first information to a first node, where the first information is used by the first node to determine relevant resources used by a terminal for sidelink positioning.

In some embodiments, the relevant resources for sidelink positioning include at least one of: ranging and sidelink positioning protocol transmission resources, or sidelink positioning resources.

In some embodiments, the first information includes at least one of: sidelink positioning request information, or authorization information for the terminal.

In some embodiments, the sidelink positioning request information includes at least one of: a role of the terminal, an identifier of the terminal, a transaction identifier for sidelink positioning, a service type for sidelink positioning, a QoS for sidelink positioning, transmission characteristic information of a sidelink positioning reference signal, transmission stop information of a sidelink positioning reference signal, or information of a cell where a sidelink positioning terminal is located.

In some embodiments, the transmission characteristic information of the sidelink positioning reference signal includes at least one of: cell information, bandwidth information, a transmission type, transmission information, a start time, a duration, or an end time.

In some embodiments, the authorization information for the terminal includes at least one of: role information authorized to the terminal, authorized transmission service quality information, or authorized positioning service quality information.

In some embodiments, the resource determination apparatus further includes: a receiving module configured to perform at least one of: receiving configuration information for the relevant resources for sidelink positioning sent by the first node; or receiving allocation failure information for the relevant resources for sidelink positioning sent by the first node.

In some embodiments, the configuration information and/or the allocation failure information are carried in at least one of:
a new radio positioning protocol A message, where the first node includes an access network device and the second node includes a core network device;
an NGAP message, where the first node includes an access network device and the second node includes a core network device;
a signaling, where the first node includes an access network device and the second node includes the terminal; or
an F1AP message, where the first node includes a gNB-DU in a radio access network separation architecture, and the second node includes a gNB-CU or a gNB-CU-CP in the radio access network separation architecture.

In some embodiments, the first information is carried in at least one of:
an NGAP message, where the first node includes an access network device and the second node includes a core network device;
an F1AP message, where the first node includes a gNB-DU in a radio access network separation architecture, and the second node includes a gNB-CU or a gNB-CU-CP in the radio access network separation architecture;
an XnAP message, where the first node includes a target base station in a handover procedure and the second node includes a source base station in the handover procedure, or the first node includes a new serving base station and the second node includes a last serving base station;
a new radio positioning protocol A message, where the first node includes an access network device and the second node includes a core network device; or
a signaling, where the first node includes an access network device and the second node includes the terminal.

Since the apparatus embodiments substantially correspond to the method embodiments, reference is made to the partial description of the method embodiments. The above-described apparatus embodiments are merely for the purpose of illustration, in which the modules described as separate components may be or may not be physically separated, and the components displayed as modules may be or may not be physical modules, that is, either located at one place or distributed onto a plurality of network modules. The object of embodiments of the present disclosure may be achieved by some or all of the modules in accordance with practical requirements. It would be appreciated and executable by those skilled in the art without creative efforts.

The embodiments of the present disclosure further provide a device for implementing any one of the above methods. For example, a device is provided, which includes units or modules for implementing steps performed by the terminal in any one of the above methods. For another example, another device is provided, which includes units or modules for implementing steps performed by a network device (such as an access network device, a core network functional node, a core network device, or the like) in any one of the above methods.

It should be understood that the division of the units or modules in the above device is only a logical functional division. In actual implementation, the units or modules may be fully or partially integrated into a physical entity, or may be physically separated. Furthermore, the units or modules in the device may be implemented in the form of calling software by a processor, for example, the device includes a processor, the processor is connected to a memory, the memory has stored therein instructions, and the processor calls the instructions stored in the memory to implement any one of the above methods or to implement the functions of the units or modules of the above device. The processor is, for example, a general-purpose processor, such as a central processing unit (CPU) or a microprocessor, and the memory is either internal to the device or external to the device. Alternatively, the units or modules in the device may be implemented in the form of hardware circuits. The functions of some or all of the units or modules may be achieved by designing the hardware circuits. The above-mentioned hardware circuits may be understood as one or more processors. For example, in an implementation, the above-mentioned hardware circuit is an application-specific integrated circuit (ASIC). The functions of some or all of the above-mentioned units or modules are achieved by designing the logical relationships between the components within the circuit. As another example, in another implementation, the above-mentioned hardware circuit may be implemented by a programmable logic device (PLD). Taking a field programmable gate array (FPGA) as an example, it may include a large number of logic gates. The connection relationships between the logic gates are configured via configuration files, thereby achieving the functions of some or all of the above-mentioned units or modules. All units or modules of the above device may be implemented entirely in the form of calling software by the processor, or entirely by hardware circuits, or partially in the form of calling software by the processor and the rest by hardware circuits.

In the embodiments of the present disclosure, the processor is a circuit with signal processing functions. In an implementation, the processor may be a circuit with instruction reading and running functions, such as a CPU, a microprocessor, a graphics processing unit (GPU) (which may be understood as a microprocessor), or a digital signal processor (DSP). In another implementation, the processor may implement certain functions by means of the logical relationship of hardware circuits. The logical relationship of the above-mentioned hardware circuits is fixed or reconfigurable. For example, the processor is a hardware circuit implemented by an ASIC or a PLD, such as an FPGA. In a reconfigurable hardware circuit, the process of loading, by the processor, a configuration document to implement the hardware circuit configuration may be understood as the process of loading, by the processor, instructions to implement the functions of some or all of the above units or modules. In addition, the processor is may also be a hardware circuit designed for artificial intelligence, which may be understood as ASIC, such as a neural network processing unit (NPU), a tensor processing unit (TPU), a deep learning processing unit (DPU), or the like.

FIG. 8 is a schematic block diagram of a communication device 8100 provided in an embodiment of the present disclosure. The communication device 8100 may be a network device (such as an access network device, a core network device, or the like), a terminal (such as a user equipment, or the like), a chip, chip system, or processor that supports a network device to implement any one of the above methods, or a chip, chip system, or processor that supports a terminal to report and implement any one of the above methods. The communication device 8100 may be configured to implement the methods as described in the above-mentioned method embodiments. For details, reference may be made to the description in the above-mentioned method embodiments.

As shown in FIG. 8, the communication device 8100 includes one or more processors 8101. The processor 8101 may be a general-purpose processor, a special-purpose processor, or the like. The processor 8101 may be, for example, a baseband processor or a central processor. The baseband processor may be configured to process a communication protocol and communication data, and the central processor may be configured to control a communication device (such as a base station, a baseband chip, a terminal, a terminal chip, a DU, a CU, or the like), execute a program, and process data of the program. The processor 8101 is configured to call instructions to enable the communication device 8100 to execute any one of the above methods.

In some embodiments, the communication device 8100 further includes one or more memories 8102 for storing instructions. Alternatively, all or some of the memories 8102 may be located outside the communication device 8100.

In some embodiments, the communication device 8100 further includes one or more transceivers 8103. When the communication device 8100 includes one or more transceivers 8103, the communication steps such as sending and receiving steps in the above methods are performed by the transceiver 8103, and the other steps are performed by the processor 8101.

In some embodiments, the transceiver may include a receiver and a transmitter, and the receiver and the transmitter may be separate or integrated. Optionally, terms such as transceiver, transceiver unit, transceiver device, and transceiver circuit may be used interchangeably; terms such as transmitter, transmitter unit, transmitter device, and transmitter circuit may be used interchangeably; and terms such as receiver, receiver unit, receiver device, and receiver circuit may be used interchangeably.

Optionally, the communication device 8100 further includes one or more interface circuits 8104, which are connected to the memory 8102. The interface circuits 8104 may be configured to receive signals from the memory 8102 or other devices, and may be configured to send signals to the memory 8102 or other devices. For example, the interface circuits 8104 may read instructions stored in the memory 8102 and send the instructions to the processor 8101.

The communication device 8100 described in the above embodiments may be a network device or a terminal, but the scope of the communication device 8100 described in the present disclosure is not limited thereto, and the structure of the communication device 8100 may not be limited to FIG. 8. The communication device 8100 may be a standalone device or part of a larger device. For example, the communication device 8100 may be (1) a stand-alone integrated circuit (IC), or a chip, or a chip system or subsystem; (2) a set of one or more ICs, in which optionally, the set of ICs may further include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network device, a cloud device, an artificial intelligence device, or the like; or (6) others.

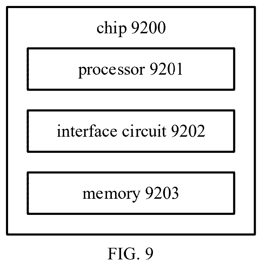

FIG. 9 is a schematic block diagram of a chip 9200 provided in an embodiment of the present disclosure. For the case where the communication device 8100 may be a chip or a chip system, reference may be made to the block diagram of the chip 9200 shown in FIG. 9, but the present disclosure is not limited thereto.

The chip 9200 includes one or more processors 9201, and the one or more processors 9201 are configured to call instructions, so that the chip 9200 executes any one of the above methods.

In some embodiments, the chip 9200 further includes one or more interface circuits 9202, which are connected to the memory 9203. The interface circuits 9202 may be configured to receive signals from the memory 9203 or other devices, and may be configured to send signals to the memory 9203 or other devices.

For example, the interface circuits 9202 may read instructions stored in memory 9203 and send the instructions to the processor 9201. Optionally, terms such as interface circuit, interface, transceiver pin, and transceiver may be used interchangeably.

In some embodiments, the chip 9200 further includes one or more memories 9203 for storing instructions. Alternatively, all or some of the memories 9203 may be located outside the chip 9200.

The present disclosure further provides a storage medium, which has stored therein instructions that, when executed on the communication device 8100, cause the communication device 8100 to perform any one of the above methods. Optionally, the above-mentioned storage medium is an electronic storage medium. Optionally, the above-mentioned storage medium is a computer-readable storage medium, but is not limited thereto; and the above-mentioned storage medium may also be a storage medium readable by other devices. Optionally, the above storage medium may be a non-transitory storage medium, but is not limited thereto; and the above-mentioned storage medium may also be a transitory storage medium.

The present disclosure further provides a program product that, when executed by the communication device 8100, causes the communication device 8100 to perform any one of the above methods. Optionally, the above-mentioned program product is a computer program product.

The present disclosure further provides a computer program that, when executed on a computer, causes the computer to perform any one of the above methods.

## Claims

1. A resource determination method, performed by a first node and comprising:
determining relevant resources used by a terminal for sidelink positioning based on first information received from a second node.

2. The method according to claim 1, wherein the relevant resources for sidelink positioning comprise at least one of:
ranging and sidelink positioning protocol transmission resources; or
sidelink positioning resources.

3. The method according to any one of claims 1 to 2, wherein the first information comprises at least one of:
sidelink positioning request information; or
authorization information for the terminal.

4. The method according to claim 3, wherein the sidelink positioning request information comprises at least one of:
a role of the terminal;
an identifier of the terminal;
a transaction identifier for sidelink positioning;
a service type for sidelink positioning;
a Quality of Service (QoS) for sidelink positioning;
transmission characteristic information of a sidelink positioning reference signal;
transmission stop information of a sidelink positioning reference signal; or
information of a cell where a sidelink positioning terminal is located.

5. The method according to claim 4, wherein the transmission characteristic information of the sidelink positioning reference signal comprises at least one of:
cell information;
bandwidth information;
a transmission type;
transmission information;
a start time;
a duration; or
an end time.

6. The method according to claim 3, wherein the authorization information for the terminal comprises at least one of:
role information authorized to the terminal;
authorized transmission service quality information; or
authorized positioning service quality information.

7. The method according to any one of claims 1 to 6, further comprising at least one of:
determining to allocate the relevant resources for sidelink positioning to the terminal, and sending configuration information for the relevant resources for sidelink positioning to the second node; or
determining not to allocate the relevant resources for sidelink positioning to the terminal, and sending allocation failure information for the relevant resources for sidelink positioning to the second node.

8. The method according to claim 7, wherein the configuration information and/or the allocation failure information are carried in at least one of:
a new radio positioning protocol A message, wherein the first node comprises an access network device and the second node comprises a core network device;
a next generation application protocol (NGAP) message, wherein the first node comprises an access network device and the second node comprises a core network device;
a signaling, wherein the first node comprises an access network device and the second node comprises the terminal; or
an F1 application protocol (F1AP) message, wherein the first node comprises a next generation Node B-distributed unit (gNB-DU) in a radio access network separation architecture, and the second node comprises a next generation Node B-centralized unit (gNB-CU) or a next generation Node B-centralized unit-control plane (gNB-CU-CP) in the radio access network separation architecture.

9. The method according to any one of claims 1 to 8, further comprising:
sending information for the relevant resources used by the terminal for sidelink positioning to a third node.

10. The method according to claim 9, wherein sending the information for the relevant resources used by the terminal for sidelink positioning to the third node comprises:
sending the information for the relevant resources used by the terminal for sidelink positioning to the third node via a fourth node.

11. The method according to any one of claims 1 to 10, wherein the first information is carried in at least one of:
an NGAP message, wherein the first node comprises an access network device and the second node comprises a core network device;
an F1AP message, wherein the first node comprises a gNB-DU in a radio access network separation architecture, and the second node comprises a gNB-CU or a gNB-CU-CP in the radio access network separation architecture;
an Xn application protocol (XnAP) message, wherein the first node comprises a target base station in a handover procedure and the second node comprises a source base station in the handover procedure, or the first node comprises a new serving base station and the second node comprises a last serving base station;
a new radio positioning protocol A message, wherein the first node comprises an access network device and the second node comprises a core network device; or
a signaling, wherein the first node comprises an access network device and the second node comprises the terminal.

12. A resource determination method, performed by a second node and comprising:
sending first information to a first node, wherein the first information is used by the first node to determine relevant resources used by a terminal for sidelink positioning.

13. The method according to claim 12, wherein the relevant resources for sidelink positioning comprise at least one of:
ranging and sidelink positioning protocol transmission resources; or
sidelink positioning resources.

14. The method according to any one of claims 12 to 13, wherein the first information comprises at least one of:
sidelink positioning request information; or
authorization information for the terminal.

15. The method according to claim 14, wherein the sidelink positioning request information comprises at least one of:
a role of the terminal;
an identifier of the terminal;
a transaction identifier for sidelink positioning;
a service type for sidelink positioning;
a Quality of Service (QoS) for sidelink positioning;
transmission characteristic information of a sidelink positioning reference signal;
transmission stop information of a sidelink positioning reference signal; or
information of a cell where a sidelink positioning terminal is located.

16. The method according to claim 15, wherein the transmission characteristic information of the sidelink positioning reference signal comprises at least one of:
cell information;
bandwidth information;
a transmission type;
transmission information;
a start time;
a duration; or
an end time.

17. The method according to claim 14, wherein the authorization information for the terminal comprises at least one of:
role information authorized to the terminal;
authorized transmission service quality information; or
authorized positioning service quality information.

18. The method according to any one of claims 12 to 17, further comprising at least one of:
receiving configuration information for the relevant resources for sidelink positioning sent by the first node; or
receiving allocation failure information for the relevant resources for sidelink positioning sent by the first node.

19. The method according to claim 18, wherein the configuration information and/or the allocation failure information are carried in at least one of:
a new radio positioning protocol A message, wherein the first node comprises an access network device and the second node comprises a core network device;
a next generation application protocol (NGAP) message, wherein the first node comprises an access network device and the second node comprises a core network device;
a signaling, wherein the first node comprises an access network device and the second node comprises the terminal; or
an F1 application protocol (F1AP) message, wherein the first node comprises a next generation Node B-distributed unit (gNB-DU) in a radio access network separation architecture, and the second node comprises a next generation Node B-centralized unit (gNB-CU) or a next generation Node B-centralized unit-control plane (gNB-CU-CP) in the radio access network separation architecture.

20. The method according to any one of claims 12 to 19, wherein the first information is carried in at least one of:
an NGAP message, wherein the first node comprises an access network device and the second node comprises a core network device;
an F1AP message, wherein the first node comprises a gNB-DU in a radio access network separation architecture, and the second node comprises a gNB-CU or a gNB-CU-CP in the radio access network separation architecture;
an Xn application protocol (XnAP) message, wherein the first node comprises a target base station in a handover procedure and the second node comprises a source base station in the handover procedure, or the first node comprises a new serving base station and the second node comprises a last serving base station;
a new radio positioning protocol A message, wherein the first node comprises an access network device and the second node comprises a core network device; or
a signaling, wherein the first node comprises an access network device and the second node comprises the terminal.

21. A resource determination apparatus, configured at a first node and comprising:
a processing module configured to determine relevant resources used by a terminal for sidelink positioning based on first information received from a second node.

22. A resource determination apparatus, configured at a second node and comprising:
a sending module configured to send first information to a first node, wherein the first information is used by the first node to determine relevant resources used by a terminal for sidelink positioning.

23. A communication device, comprising:
one or more processors,
wherein the one or more processors are configured to call instructions to cause the communication device to execute the resource determination apparatus according to any one of claims 1 to 11 or any one of claims 12 to 20.

24. A storage medium having stored therein instructions that, when executed on a communication device, causes the communication device to perform the resource determination method according to any one of claims 1 to 11 or any one of claims 12 to 20.
